# FASCICULE DE BREVET EUROPEEN

(11) **EP 4 008 592 B1**
(45) Date de publication et mention de la délivrance du brevet: **26.06.2024**
(21) Numéro de dépôt: 21211221.3
(22) Date de dépôt: 30.11.2021
(51) Int. Cl.: B60R 21/231

(54) **DISPOSITIF DE RETENUE D'UN OCCUPANT DE SIEGE DE VEHICULE AUTOMOBILE**
VORRICHTUNG ZUM ZURÜCKHALTEN EINES INSASSEN AUF EINEM SITZ EINES KRAFTFAHRZEUGSITZES
DEVICE FOR RETAINING AN OCCUPANT OF A MOTOR VEHICLE SEAT

(30) Priorité: 02.12.2020 FR 2012522
(43) Date de publication de la demande: 08.06.2022
(73) Titulaire: Renault s.a.s, 92100 Boulogne Billancourt (FR)
(72) Inventeur: RUFFET, Renaud, 78960 VOISINS LE BRETONNEUX (FR)
(74) Mandataire: Renault Group

(56) Documents cités:
- DE-A1-102017 131 140
- DE-A1-102017 208 481

## Description

### DOMAINE TECHNIQUE DE L'INVENTION

La présente invention concerne de manière générale la sécurité des passagers de véhicules, et notamment des passagers d'automobiles (voitures, camions, camionnettes...).

Elle concerne plus particulièrement un dispositif de retenue d'un occupant d'un siège de véhicule, comprenant deux coussins gonflables de sécurité (plus connus sous la dénomination anglaise « d'airbags ») qui sont adaptés à être logés dans le siège et qui, lorsqu'ils sont gonflés, sont adaptés à se déployer de part et d'autre de l'occupant jusqu'à venir au contact l'un de l'autre par leurs bords d'extrémité.

Elle concerne également un siège équipé d'un tel dispositif de retenue.

### ETAT DE LA TECHNIQUE

On connaît notamment du document DE102017131140, qui montre le préambule de la revendication 1, un siège équipé, dans chacun des deux flancs de son dossier, d'un coussin gonflable. Ces deux coussins sont prévus pour se gonfler en cas de choc frontal de telle sorte qu'ils se déploient de part et d'autre de l'occupant du siège puis devant lui. Ces deux coussins permettent alors de remplacer le coussin qui est généralement prévu dans le volant du véhicule.

Une fois déployés, les bords d'extrémité des deux coussins viennent se superposer à l'avant de l'occupant.

Dans ce document, il est expliqué que les surfaces de contact entre les deux coussins sont alors revêtues d'un matériau ayant un coefficient de frottement élevé. De cette façon, lorsque sous l'effet de l'inertie, l'occupant vient en appui contre ces deux coussins, ces derniers restent bien au contact l'un de l'autre ce qui évite que l'occupant passe entre eux et percute la planche de bord du véhicule.

Ce document présente une autre solution, consistant à utiliser du Velcro^{™} sur les surfaces de contact.

Malheureusement, aucune de ces deux solutions ne présente une fiabilité suffisante permettant de faire en sorte que l'occupant ne passe jamais entre les deux coussins.

### PRESENTATION DE L'INVENTION

Afin de remédier à l'inconvénient précité de l'état de la technique, la présente invention propose de prévoir des moyens d'accroche complémentaires sur les deux coussins.

Plus particulièrement, on propose selon l'invention un dispositif de retenue tel que défini dans dans la revendication 1.

Ainsi, grâce à l'invention, la forme particulière des deux coussins gonflables permet de bloquer leurs bords d'extrémité l'un contre l'autre. Ce blocage est d'autant plus efficace que lorsque, sous l'effet de l'inertie, l'occupant vient appuyer contre le bord d'extrémité d'un coussin, ce dernier se retrouve pris en sandwich et donc pincé entre l'occupant et le bord d'extrémité de l'autre coussin.

D'autres caractéristiques avantageuses et non limitatives du dispositif de retenue conforme à l'invention, prises individuellement ou selon toutes les combinaisons techniquement possibles, sont les suivantes :
- le premier coussin gonflable de sécurité comporte une pièce en tissu ;
- le bord d'extrémité du premier coussin gonflable de sécurité porte, sur au moins l'une de ses faces délimitant la gorge, un élément de rigidification qui est rapporté sur ladite pièce en tissu et qui est réalisé dans un matériau différent du tissu ;
- ledit élément de rigidification s'étend sur une partie au moins du fond de la gorge et sur une partie au moins de l'une des faces latérales de la gorge ;
- ledit élément de rigidification présente, sur une partie qui s'étend sur l'une des faces latérales de la gorge, un renflement en saillie ;
- ledit renflement est allongé selon un axe parallèle à l'axe de la gorge ;
- ledit élément de rigidification présente, sur une partie qui s'étend sur l'une des faces latérales de la gorge, des nervures de rigidification ;
- lesdites nervures de rigidification sont allongées selon des axes orthogonaux à l'axe de la gorge ;
- ledit élément de rigidification est cousu sur ladite pièce en tissu ;

L'invention concerne aussi un siège pour véhicule, comportant une assise et un dossier qui comporte un dispositif de retenue tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue de côté d'un siège équipé d'un dispositif de retenue conforme à l'invention ;
[Fig. 2] est une vue en coupe éclatée d'un premier mode de réalisation du dispositif de retenue de la figure 1 ;
[Fig. 3] est une vue en coupe assemblée du dispositif de retenue de la figure 2 ;
[Fig. 4] est une vue en coupe éclatée d'un second mode de réalisation du dispositif de retenue de la figure 1 ;
[Fig. 5] est une vue en coupe assemblée du dispositif de retenue de la figure 4 ;
[Fig. 6] est une vue en coupe d'une partie d'une variante de réalisation du dispositif de retenue de la figure 2.

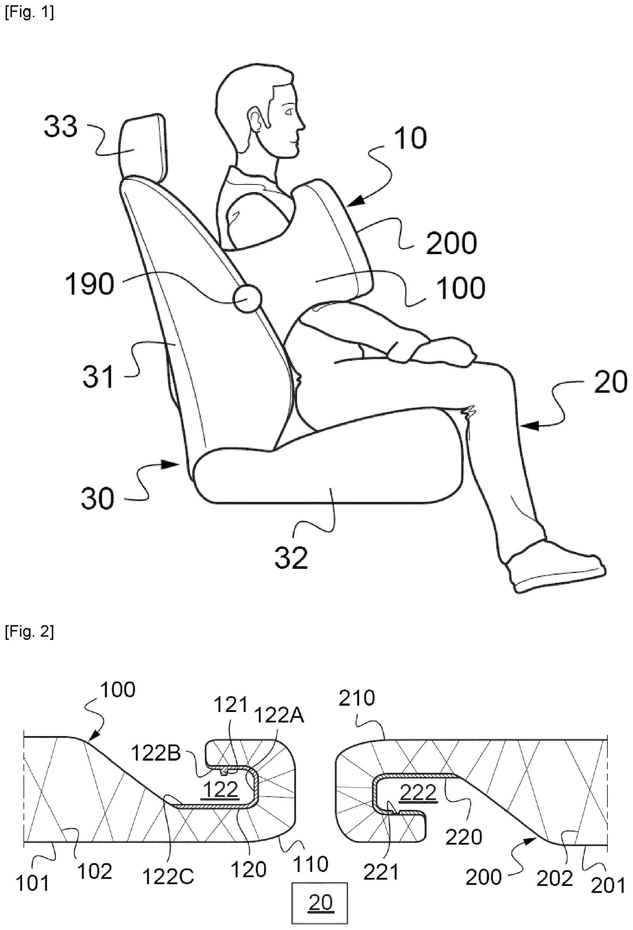

Sur la figure 1, on a représenté un siège 30 adapté à être installé dans un véhicule de tout type et pouvant accueillir un seul occupant à la fois.

Il s'agit dans l'exemple ici considéré d'un siège 30 de voiture pouvant accueillir le conducteur 20 de cette voiture.

Classiquement, ce siège 30 comporte une assise 32 et un dossier 31 qui supporte un appui-tête 33.

Le dossier 31 présente une partie centrale d'appui pour le dos du conducteur 20, et deux flancs situés de part et d'autre du tronc du conducteur lorsque ce dernier est assis en position centrée sur le siège 30.

Le siège 30 est ici équipé d'un dispositif de retenue 10 du conducteur 20 en cas de choc frontal, c'est-à-dire d'un dispositif permettant de retenir le conducteur et d'amortir le choc ressenti lorsque la voiture percute par l'avant un obstacle.

Comme le montre la figure 1, ce dispositif de retenue 10 comporte deux coussins gonflables de sécurité, ci-après appelés plus simplement coussins 100 et 200.

Ici, il ne comporte pas davantage de coussin.

Ces deux coussins 100, 200 sont entièrement logés dans le siège 30 tant qu'aucun choc n'a été ressenti (c'est-à-dire tant qu'ils sont repliés et non gonflés). Ils sont plus précisément logés dans le dossier 31 de ce siège 30.

L'un de ces coussins 100, celui de droite, est logé dans le flanc droit du dossier 31 lorsque l'autre coussin 200, le coussin gauche, est logé dans le flanc gauche du dossier 31.

Ces deux coussins 100, 200 comportent classiquement chacun une enveloppe en tissu 101, 201 et un dispositif de gonflage 190 de l'enveloppe en tissu, adapté à être activé en cas de choc frontal. Ce dispositif de gonflage étant bien connu par ailleurs, il ne sera pas ici décrit.

Comme le montre par exemple la figure 2, ces deux coussins 100, 200 comportent intérieurement des liens 102, 202 qui permettent de connecter des faces opposées de l'enveloppe en tissu 101, 201, de telle sorte que ces enveloppes une fois gonflées présentent exactement la forme souhaitée.

Lors de leur gonflage, les coussins 100, 200 sont conformés pour se déployer de part et d'autre du conducteur 20, puis pour se rabattre contre le ventre du conducteur 20 de façon à venir au contact l'un de l'autre par leurs bords d'extrémité 110, 210.

A ce stade, on pourra ainsi définir la notion de « bord d'extrémité » comme désignant une partie du coussin qui, lorsque ce dernier est gonflé, se déploie à distance du dossier 31 pour venir se placer en superposition de l'autre coussin.

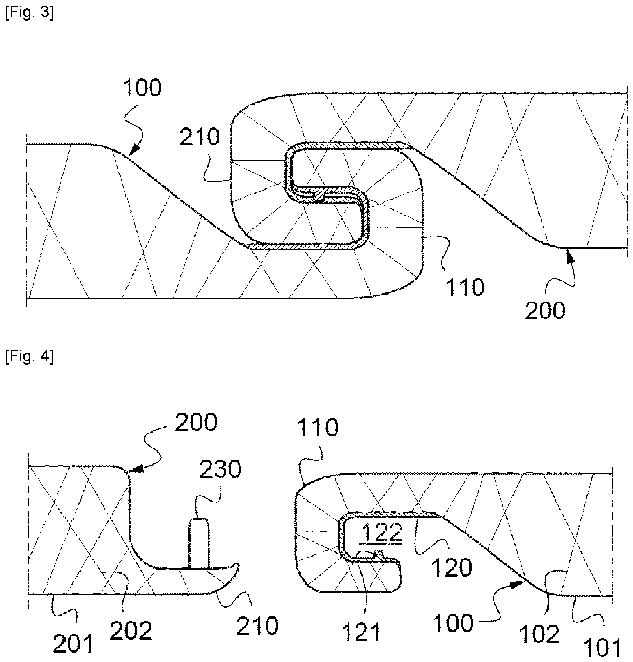

Sur les figures 2 et 3, on a représenté un premier mode de réalisation des bords d'extrémité 110, 210 des deux coussins.

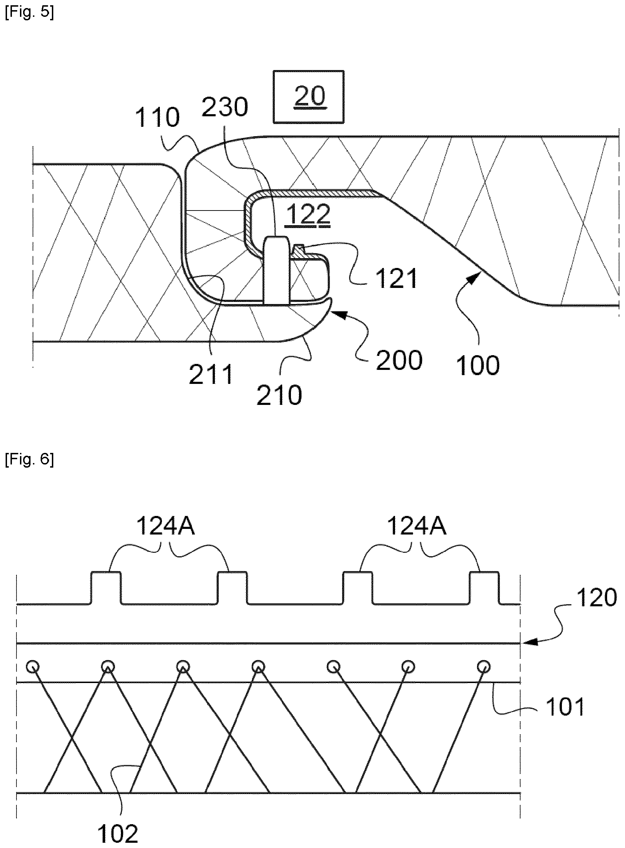

Sur les figures 4 et 5, on a représenté un second mode de réalisation de ces bords d'extrémité 110, 210.

Dans la suite de cet exposé, on décrira tout d'abord conjointement les éléments communs à ces deux modes de réalisation, puis on décrira ensuite successivement les éléments différentiant ces deux modes.

On notera à ce sujet que les éléments identiques ou similaires des différents modes de réalisation de l'invention représentés sur les différentes figures seront, dans la mesure du possible, référencés par les mêmes signes de référence et ne seront pas décrits à chaque fois.

Selon une caractéristique particulièrement avantageuse de l'invention, lorsque les deux coussins 100, 200 sont gonflés, le bord d'extrémité 110 de l'enveloppe 101 d'au moins un premier des coussins 100 est recourbé au moins à angle droit de façon à délimiter une gorge 122 à l'intérieur de laquelle s'accroche le second coussin 200.

Dans la suite de la description, ces deux coussins seront décrits à l'état gonflé.

Ici, comme le montre bien la figure 2, le bord d'extrémité 110 du premier coussin 100 présente une forme de plaque épaisse repliée deux fois à 90°, une première fois vers l'avant (à l'opposé du conducteur 20) et une seconde fois vers le côté pour former un U.

La gorge 122 ainsi délimitée s'étend longitudinalement selon un axe sensiblement vertical (à une dizaine de degrés près) et elle présente un fond 122A et deux faces latérales 122B, 122C opposées sensiblement parallèles.

La largeur du fond 122A est préférentiellement d'environ trente-cinq millimètres, tandis que celle des deux faces latérales 122B, 122C est préférentiellement environ égale à quarante millimètres.

Selon une caractéristique préférentielle de l'invention, la gorge 122 est revêtue d'un matériau plus rigide que celui de l'enveloppe 101 en tissu. Plus précisément ici, le coussin 100 comporte un élément de rigidification 120 qui est fixé dans cette gorge 122.

Par plus rigide, on entend qu'il est moins souple, c'est-à-dire qu'il se déforme moins en flexion que le tissu lorsqu'il est soumis à une contrainte externe. Cette rigidité est ci obtenue non seulement par le matériau utilisé pour fabriquer cet élément de rigidification, mais aussi grâce à l'épaisseur de ce dernier qui est plus épais que le tissu de l'enveloppe.

Cet élément de rigidification 120 s'étend préférentiellement sur au moins 50% de la longueur de la gorge 122. Il s'étend ici sur toute sa hauteur.

Il s'étend en outre au moins sur le fond 122A de la gorge 122 et sur une de ses faces latérales 122B, 122C. Il s'étend ici sur la totalité du fond et des deux faces latérales de la gorge, et déborde même en dehors de celle-ci.

Il est ici formé d'une seule pièce, par moulage d'un polymère. Le polymère ici utilisé est le PA6-GF30 (bien que ce ne soit évidemment pas limitatif). Son épaisseur est d'environ 2 millimètres.

Cet élément de rigidification 120 est fixé à l'enveloppe 101. Il y est ici fixé par une couture, mais en variante, il pourrait y être fixé autrement, par exemple par collage.

L'élément de rigidification 120 présente ici la forme d'un profilé de section transversale en U.

Il est donc formé de trois parties, dont une paroi de fond sensiblement plane et deux parois latérales sensiblement planes également.

L'une de ces deux parois latérales présente toutefois un renflement 121 en saillie.

Ce renflement 121 présente une forme allongée le long de la gorge 122. Il s'étend ici sur la totalité de la longueur de la gorge 122 mais il pourrait en variante ne s'étendre que sur une partie de celle-ci.

Il présente ici une section de forme invariable le long de la gorge 122 mais sa section pourrait en variante présenter une forme variable. Il pourrait même présenter des interruptions.

Ce renflement 121 s'étend de préférence sur la paroi latérale de l'élément de rigidification 120 qui est située du côté avant (à l'opposé du conducteur 20), à proximité de l'extrémité libre de l'enveloppe 101. Il s'étend donc en saillie vers l'arrière, c'est-à-dire vers le buste du conducteur 20. Il permet de retenir en position l'autre coussin 200 lorsque le conducteur 20 est projeté vers l'avant, contre ces coussins, en cas de choc frontal.

La forme de ce premier coussin 100 est la même dans les deux modes de réalisation de l'invention illustrés sur les figures.

En revanche, la forme de l'autre coussin 200 diffère dans l'un et l'autre de ces deux modes de réalisation.

D'après l'invention, comme illustré sur les figures 2 et 3, le bord d'extrémité 210 du second coussin 200 est recourbé de façon à présenter une forme complémentaire de celle du bord d'extrémité 110 du premier coussin 100. Les deux bords d'extrémité 110, 210 sont donc prévus pour s'emboîter l'un dans l'autre lorsque les deux coussins sont gonflés.

Ainsi, ce second coussin 200 comporte une enveloppe 201 avec des liens 202 intérieurs et un bord d'extrémité 210 recourbé en U autour d'un axe vertical de façon à délimiter une gorge 222. Il est ici préférentiellement équipé d'un élément de rigidification 220 en forme de profilé en U.

Cet élément de rigidification 220 diffère de celui équipant le premier coussin 100 en ce qu'il comporte non pas un renflement 121 en saillie, mais plutôt un creux 221 de forme complémentaire de celle du renflement 121.

Ainsi, le bord d'extrémité 210 du second coussin 200 peut-il s'emboîter parfaitement dans le bord d'extrémité 110 du premier coussin 100. Dans cette position, le renflement 121 se loge dans le creux 221, ce qui assure encore une meilleure fixation des deux coussins ensemble.

En effet, en cas de choc frontal, lorsque le conducteur 20 appuie sur le premier coussin 100, l'effort qui s'exerce a tendance à écarter les deux coussins 100, 200 l'un de l'autre. Grâce aux bords d'extrémité des coussins qui se crochètent respectivement l'un avec l'autre et grâce aux éléments de rigidification 120, 220, les deux bords d'extrémité restent attachés l'un à l'autre, ce qui empêche le conducteur 20 de passer entre les deux coussins. L'effort exercé par le conducteur 20 sur les coussins 100, 200 a en outre tendance à écraser les bords d'extrémité 110, 210 de ces coussins l'un sur l'autre, de sorte qu'ils se pincent ensemble, ce qui participe à l'assujettissement de ces deux bords d'extrémité.

Les deux coussins 100, 200 peuvent alors correctement assurer leurs fonctions de retenue et d'amortissement du choc.

Dans le second mode de réalisation illustré sur les figures 4 et 5, le bord d'extrémité 210 du second coussin 200 porte une sangle 230 qui, lorsque les deux coussins 100, 200 sont gonflés, entoure le bord d'extrémité 110 du premier coussin 100.

Plus précisément ici, ce second coussin 200 présente une enveloppe 201 avec des liens 202 intérieurs et un bord d'extrémité 210 qui cette fois n'est pas recourbé en U mais qui au contraire s'affine par rapport au reste du second coussin, de façon à pouvoir s'appliquer d'un côté du bord d'extrémité 110 du premier coussin 100 (à savoir du côté par lequel la gorge 122 est accessible, ici le côté avant).

La réduction d'épaisseur du bord d'extrémité 210 forme alors avec le reste du second coussin 200 un creux 211 contre lequel s'applique le bord d'extrémité 110 du premier coussin 100.

La sangle 230 s'étend donc dans ce creux 211, à partir de la face du bord d'extrémité 210 du second coussin 200 qui est tournée vers le bord d'extrémité 110 du premier coussin 100 (ici la face arrière).

Cette sangle 230 est attachée par ses deux extrémités à l'enveloppe du second coussin 200, par exemple par collage ou par des coutures.

Elle y est attachée de telle sorte que, lorsque le second coussin 200 est gonflé, cette sangle se tend à distance de la face arrière du bord d'extrémité 210, ce qui lui permet de se crocheter dans la gorge 122 délimitée par le premier coussin 100, entre le fond de la gorge 122 et le renflement 121.

Pour cela, on peut par exemple prévoir que les bords supérieur et inférieur du second coussin 200 soient recourbés vers l'arrière, et que la sangle 230 s'attache par ses extrémités à ces bords supérieur et inférieur.

En cas de choc frontal, lorsque les deux coussins 100, 200 sont gonflés et accrochés ensemble et que le conducteur 20 appuie sur le premier coussin 100, l'effort qui s'exerce a tendance à écarter les deux coussins 100, 200 l'un de l'autre. Grâce au bord d'extrémité 110 du premier coussin 100 qui est crocheté dans la sangle 230, et grâce à l'élément de rigidification 120, les deux bords d'extrémité restent attachés l'un à l'autre ce qui empêche le conducteur 20 de passer entre les deux coussins. Ces derniers peuvent alors correctement assurer leurs fonctions de retenue et d'amortissement du choc.

Sur la figure 6, on a représenté une variante de réalisation de l'élément de rigidification 120 équipant le premier coussin 100.

Dans les deux modes de réalisation décrits en référence aux figures 2 à 4, on a considéré que cet élément de rigidification 120 comportait trois parois en U, chacune sensiblement plane (à l'exception de la zone dans laquelle se situe le renflement 121).

Dans la variante illustrée sur la figure 6, on a représenté une section de cet élément de rigidification 120 dans un plan qui est vertical et longitudinal par rapport à la voiture. On y observe que l'une au moins des parois de l'élément de rigidification 120 présente, sur une partie au moins de sa longueur, des nervures de rigidification 124A allongées selon des axes orthogonaux par rapport à l'axe de la gorge 122.

Ces nervures de rigidification 124A permettent à l'élément de rigidification 120 de bien garder sa forme profilée en U lors du choc frontal, ce qui assure une meilleure attache des deux coussins l'un à l'autre.

D'autres variantes de réalisation de l'invention sont envisageables.

A titre d'exemple, on pourrait prévoir que l'élément de rigidification soit fixé non par dans la gorge mais à l'opposé, sur la face externe du bord d'extrémité.

On pourrait par ailleurs prévoir que le bord d'extrémité forme un crochet recourbé non pas à 180° pour former un U, mais à un angle inférieur ou supérieur. Cet angle sera strictement supérieur à 90° et sera de préférence supérieur à 135 degrés.

Encore en variante, on pourrait prévoir d'installer plusieurs dispositifs de retenue 10 tels que celui décrit supra, dans une seule et même banquette adaptée à recevoir simultanément plusieurs occupants.

## Revendications

1. Dispositif de retenue (10) d'un occupant (20) d'un siège (30) de véhicule, comprenant deux coussins gonflables de sécurité (100, 200) qui sont adaptés à être logés dans le siège (30) et qui, lorsqu'ils sont gonflés, sont adaptés à se déployer de part et d'autre de l'occupant (20) jusqu'à venir au contact l'un de l'autre par leurs bords d'extrémité (110, 210),
caractérisé en que, lorsque les deux coussins gonflables de sécurité (100, 200) sont gonflés :
- le bord d'extrémité (110) d'un premier des coussins gonflables de sécurité (100) est recourbé en U de façon à délimiter une gorge (122) qui présente un fond (122A) et deux faces latérales (122B, 122C) opposées sensiblement parallèles,
- le bord d'extrémité (210) d'un second des coussins gonflables de sécurité (200) est recourbé de façon à présenter une forme en U complémentaire de celle du bord d'extrémité (110) du premier coussin gonflable de sécurité (100), et
- le bord d'extrémité (210) du second des coussins gonflables de sécurité (200) est emboîté dans le bord d'extrémité (110) du premier des coussins gonflables de sécurité (100) de manière à s'accrocher à l'intérieur de ladite gorge (122).

2. Dispositif de retenue (10) selon la revendication précédente, dans lequel le premier coussin gonflable de sécurité (100) comporte une pièce en tissu et dans lequel le bord d'extrémité (110) du premier coussin gonflable de sécurité (100) porte, sur au moins l'une de ses faces délimitant la gorge (122), un élément de rigidification (120) qui est rapporté sur ladite pièce en tissu et qui est réalisé dans un matériau différent du tissu.

3. Dispositif de retenue (10) selon les deux revendications précédentes, dans lequel ledit élément de rigidification (120) s'étend sur une partie au moins du fond (122A) de la gorge (122) et sur une partie au moins de l'une des faces latérales (122B, 122C) de la gorge (122).

4. Dispositif de retenue (10) selon la revendication précédente, dans lequel ledit élément de rigidification (120) présente, sur une partie qui s'étend sur l'une des faces latérales (122B, 122C) de la gorge (122), un renflement (121) en saillie, ledit renflement (121) étant préférentiellement allongé selon un axe parallèle à l'axe de la gorge (122).

5. Dispositif de retenue (10) selon l'une des deux revendications précédentes, dans lequel ledit élément de rigidification (120) présente, sur une partie qui s'étend sur l'une des faces latérales (122B, 122C) de la gorge (122), des nervures de rigidification (124A), lesdites nervures de rigidification (124A) étant préférentiellement allongées selon des axes orthogonaux à l'axe de la gorge (122).

6. Dispositif de retenue (10) selon l'une des revendications 2 à 5, dans lequel ledit élément de rigidification (120) est cousu sur ladite pièce en tissu.

7. Siège (30) pour véhicule, comportant une assise (32) et un dossier (31), **caractérisé en ce que** le dossier (31) comporte un dispositif de retenue (10) conforme à l'une des revendications précédentes.

## Patentansprüche

1. Vorrichtung zum Zurückhalten (10) eines Insassen (20) auf einem Sitz (30) eines Fahrzeugs, beinhaltend zwei aufblasbare Sicherheitssäcke (100, 200), die dazu angepasst sind, in dem Sitz (30) untergebracht zu sein, und die, wenn sie aufgeblasen werden, dazu angepasst sind, sich zu beiden Seiten des Insassen (20) auszubreiten, bis sie an ihren Endrändern (110, 210) miteinander in Kontakt kommen,
**dadurch gekennzeichnet, dass**, wenn die zwei aufblasbaren Sicherheitssäcke (100, 200) aufgeblasen sind:
- der Endrand (110) eines ersten der aufblasbaren Sicherheitssäcke (100) so zu einem U gekrümmt ist, dass er eine Nut (122) begrenzt, die einen Boden (122A) und zwei im Wesentlichen parallele, einander gegenüberliegende Seitenflächen (122B, 122C) aufweist,
- der Endrand (210) eines zweiten der aufblasbaren Sicherheitssäcke (200) so gekrümmt ist, dass er eine U-Form aufweist, die zu derjenigen des Endrands (110) des ersten aufblasbaren Sicherheitssacks (100) komplementär ist, und
- der Endrand (210) des zweiten der aufblasbaren Sicherheitssäcke (200) in den Endrand (110) des ersten der aufblasbaren Sicherheitssäcke (100) eingesteckt ist, sodass er sich im Inneren der Nut festhakt (122).

2. Rückhaltevorrichtung (10) nach dem vorhergehenden Anspruch, wobei der erste aufblasbare Sicherheitssack (100) ein Teil aus Stoff umfasst und wobei der Endrand (110) des ersten aufblasbaren Sicherheitssacks (100) auf mindestens einer seiner Flächen, die die Nut (122) begrenzen, ein Versteifungselement (120) trägt, das an dem Teil aus Stoff angebracht ist und das aus einem Material hergestellt ist, das sich von dem Stoff unterscheidet.

3. Rückhaltevorrichtung (10) nach den zwei vorhergehenden Ansprüchen, wobei sich das Versteifungselement (120) über mindestens einen Abschnitt des Bodens (122A) der Nut (122) und über mindestens einen Abschnitt einer der Seitenflächen (122B, 122C) der Nut (122) erstreckt.

4. Rückhaltevorrichtung (10) nach dem vorhergehenden Anspruch, wobei das Versteifungselement (120) auf einem Abschnitt, der sich auf einer der Seitenflächen (122B, 122C) der Nut (122) erstreckt, eine vorstehende Verdickung (121) aufweist, wobei sich die Verdickung (121) vorzugsweise gemäß einer Achse längserstreckt, die zu der Achse der Nut (122) parallel ist.

5. Rückhaltevorrichtung (10) nach einem der zwei vorhergehenden Ansprüche, wobei das Versteifungselement (120) auf einem Abschnitt, der sich auf einer der Seitenflächen (122B, 122C) der Nut (122) erstreckt, Versteifungsrippen (124A) aufweist, wobei sich die Versteifungsrippen (124A) vorzugsweise gemäß Achsen längserstrecken, die zu der Achse der Nut (122) orthogonal sind.

6. Rückhaltevorrichtung (10) nach einem der Ansprüche 2 bis 5, wobei das Versteifungselement (120) an das Teil aus Stoff angenäht ist.

7. Sitz (30) für ein Fahrzeug, umfassend eine Sitzfläche (32) und eine Rückenlehne (31), **dadurch gekennzeichnet, dass** die Rückenlehne (31) eine Rückhaltevorrichtung (10) nach einem der vorhergehenden Ansprüche umfasst.

## Claims

1. Restraining device (10) for restraining an occupant (20) of a vehicle seat (30), comprising two inflatable airbags (100, 200) which are able to be housed in the seat (30) and which, when inflated, are able to deploy one on each side of the occupant (20) until they come into contact with one another via their end edges (110, 210),
**characterized in that**, when the two inflatable airbags (100, 200) are inflated:
- the end edge (110) of a first of the inflatable airbags (100) is curved into a U-shape so as to delimit a channel (122) which has a bottom (122A) and two substantially parallel opposite lateral faces (122B, 122C),
- the end edge (210) of a second of the inflatable airbags (200) is curved so as to have a U-shape complementing that of the end edge (110) of the first inflatable airbag (100), and
- the end edge (210) of the second of the inflatable airbags (200) is nested with the end edge (110) of the first of the inflatable airbags (100) in such a way as to interlock within said channel (122).

2. Restraining device (10) according to the preceding claim, wherein the first inflatable airbag (100) comprises a part made of fabric and wherein the end edge (110) of the first inflatable airbag (100) bears, on at least one of its faces delimiting the channel (122), a stiffening element (120) which is attached to said part made of fabric and which is made from a material different from the fabric.

3. Restraining device (10) according to the two preceding claims, wherein said stiffening element (120) extends over at least part of the bottom (122A) of the channel (122) and over at least part of one of the lateral faces (122B, 122C) of the channel (122).

4. Restraining device (10) according to the preceding claim, wherein said stiffening element (120) has, over a portion that extends along one of the lateral faces (122B, 122C) of the channel (122), a protruding bulge (121), said bulge (121) preferably being elongate along an axis parallel to the axis of the channel (122).

5. Restraining device (10) according to one of the two preceding claims, wherein said stiffening element (120) has, over a portion that extends along one of the lateral faces (122B, 122C) of the channel (122), stiffening ribs (124A), said stiffening ribs (124A) preferably being elongate along axes orthogonal to the axis of the channel (122).

6. Restraining device (10) according to one of Claims 2 to 5, wherein said stiffening element (120) is stitched to said part made of fabric.

7. Vehicle seat (30) comprising a seat squab (32) and a backrest (31), **characterized in that** the backrest (31) comprises a restraining device (10) according to one of the preceding claims.
